(19) Europäisches Patentamt
European Patent Office
Office européen des brevets

(11) **EP 2 871 765 A1**

(12) **EUROPEAN PATENT APPLICATION**

(43) Date of publication:
**13.05.2015 Bulletin 2015/20**

(21) Application number: **13192187.6**

(22) Date of filing: **08.11.2013**

(51) Int Cl.:
***H02M 7/487*** (2007.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Vincotech GmbH 82008 Unterhaching (DE)**

(72) Inventors:
• **Temesi, Ernö 2094 Nagykovácsi (HU)**

• **Frisch, Michael 82008 Unterhaching (DE)**

(74) Representative: **Grünecker Patent- und Rechtsanwälte PartG mbB Leopoldstraße 4 80802 München (DE)**

Remarks:
Amended claims in accordance with Rule 137(2) EPC.

(54) **NPC converter for use in power module, and power module incorporating same**

(57) The invention relates to an improved neutral point clamped, NPC, converter is and a power module incorporating same. A positive and a negative switching circuit of the NPC converter are configured to supply, to an output terminal, a positive and a negative voltage level provided at a positive and negative input terminal, respectively. A neutral switching circuit of the NPC converter is configured to supply, to the output terminal, a neutral voltage level provided at a neutral input terminal. Each of the positive and the negative switching circuits circuit includes a parallel circuit of a reverse biased bypass diode and a series circuit of two switching elements for controlling the supply of the positive and negative voltage level to the output terminal. Specifically, each of the series circuits is formed of a first switching element having a body diode and of a second switching element for synchronous rectification.

FIG. 1

## Description

The present invention relates to an improved neutral point clamped, NPC, converter for converting a DC input voltage, provided at a positive, a neutral and a negative input terminal, to an AC output voltage to be supplied to an output terminal. The present invention further relates to a power module incorporating same improved NPC converter.

DC-AC converters are commonly used in different fields of technology; for example, in the field of renewable energy. Due to the technological progress and to evolving markets, the need for highly efficient converters has become more and more important. Specifically, in the field of renewable energy, for example, solar appliances require efficient DC-AC converters to convert renewable energy into a commonly accessible form and allow feedback into the power grid. In this respect it is desirable to further reduce conduction losses and switching losses within the DC-AC converters.

NPC converter topologies are popular due to their clean and easy design and a straightforward control implementation. With advances in the field of power field effect transistors, FETs, NPC converter topologies can be utilized in high voltage power modules. In the context of the invention, power modules are to be understood as supplying an AC voltage of +/- 600 Volts. In this respect, the NPC converter may (at least partly) require a voltage rating to withstand a DC voltage of 1200 Volts.

An NPC converter comprises three functionally distinct circuits. Firstly, a positive switching circuit supplies, to an output terminal of the NPC converter, a positive voltage level provided at a positive input terminal. Secondly, a negative switching circuit supplies, to the output terminal of the NPC converter, a negative voltage level provided at a negative input terminal. Thirdly, a neutral switching circuit supplies, to the output terminal of the NPC converter, a neutral voltage level provided at a neutral voltage level.

Consequently, by subsequently enabling, first, the positive switching circuit, next, the neutral switching circuit, after that, the negative switching circuit and, then, the NPC converter, a three level AC voltage is supplied to the output of the NPC converter. However, the conventional NPC converter topologies are disadvantageous with respect to the switching efficiency of a freewheeling current when supplying reactive power.

Reactive power refers to the state where voltage and current are out of phase (i.e. have a phase difference of 90°). For example, in case the NPC converter supplies reactive power, the current lags with respect to the voltage at the output terminal. Accordingly, the drive current and the voltage have a different polarity (i.e. the current flows in a different direction with respect to the voltage).

Specifically, at reactive power a freewheeling current may be flowing in reverse direction through the positive or negative switching circuit within the NPC converter. Accordingly, the switching elements of the positive or negative switching circuit of the NPC converter experience a reverse current and, hence, are subject to reverse recovery losses.

In more detail, when an NPC converter supplies reactive power a positive voltage level flows to the output terminal and a freewheeling current may flow from the output terminal to the positive input terminal i.e. in reverse direction. The reverse freewheeling current deteriorates the blocking capability of a switching element of the NPC converter in the forward direction. Specifically, the reverse freewheeling current drains charges from the drain region, resulting in inferior drain voltage blocking capabilities in the forward direction.

In general, a reverse recovery time of a diode or transistor is defined as the time the diode or transistor takes to recover to a blocking state upon the voltage across it suddenly reversing. During this reverse recovery period, a temporary short circuit may result in a large reverse current, and a large power dissipation.

It is a first object of the invention to improve the efficiency of an NPC converter by reducing the reverse recovery losses at reactive power. According to a second object of the invention, the switching losses of the NPC converter are to be improved without compromising the conduction losses (i.e. static losses) of the circuit.

The objects are solved by the subject-matter of the independent claims. Advantageous embodiments are subject to the dependent claim.

In this respect, according to a first aspect of the invention, it is suggested to provide an NPC converter with a positive and negative switching circuit that both utilize very fast switching elements. However, the body diode of each switching element in the respective positive and negative switching circuit is slow compared to the switching speed of the switching elements. Without any counter measures, a high reverse recovery current would flow within the switching elements at subsequent reactivation.

According to this aspect of the invention, a bypass diode is provided for carrying the freewheeling current, instead of the body diode in the respective switching element of the positive and negative switching circuit. Thereby, reverse recovery charges are avoided on the switching elements of the positive and negative switching circuit.

Consequently, the bypass diode, and not the switching element, is susceptible to reverse recovery current effects. However, as the bypass diode in the positive and negative switching circuit is solely provided for carrying the freewheeling current, it can be optimized (e.g. by utilizing fast silicon based diodes) to further reduce the switching losses (i.e. dynamic losses).

Further to this aspect of the invention, the switching elements in the positive and negative switching circuit are utilized for active rectification during freewheeling. In other words, the freewheeling current is carried via the switching elements to reduce conduction losses (i.e. static losses) and only shortly before reactivation is the freewheeling current redirected to flow via the bypass diode.

According to a second aspect of the invention, it is proposed to employ the advantageous NPC converter in a power module, Power modules are configured for switching high voltages (+/- 600 V) such that reduction of switching losses as well as conduction losses is favorable.

According to an embodiment in line with the first aspect of the invention, a neutral point clamped, NPC, converter is suggested for use in a power module. The NPC converter comprises a positive and a negative switching circuit and a neutral switching circuit. The positive and a negative switching circuit is configured to supply, to an output terminal of the NPC converter, a positive and a negative voltage level provided at a positive and negative input terminal of the NPC converter, respectively. The neutral switching circuit is configured to supply, to the output terminal of the NPC converter, a neutral voltage level provided at a neutral input terminal of the NPC converter. Each of the positive and the negative switching circuits of the NPC converter include a parallel circuit of a reverse biased bypass diode and a series circuit of two switching elements for controlling the supply of the positive and negative voltage level to the output terminal. Each of the series circuits, included in the positive and in the negative switching circuit of the NPC converter, is formed of a first switching element having a body diode and of a second switching element for synchronous rectification.

According to a more detailed embodiment of the NPC converter, for synchronous rectification, the second switching element, included in the positive and in the negative switching circuit of the NPC converter, is configured to block a reverse drain current (Ids) from flowing through the body diode of the first switching element, included in the respective positive and negative switching circuit.

According to another more detailed embodiment of the NPC converter the second switching element, included in the positive and in the negative switching circuit, has a body diode, and the body diode of the second switching element has an opposite direction with respect to the body diode of the first switching element, included in the respective positive and negative switching circuit of the NPC converter.

According to a further more detailed embodiment of the NPC converter, the second switching element, included in the positive and in the negative switching circuit, has a higher drain voltage (Vds) blocking capability than a threshold voltage (Vth) of the bypass diode, included in the respective positive and negative switching circuit of the NPC converter.

According to another more detailed embodiment of the NPC converter, the gates of the first and the second switching element, included in the positive and in the negative switching circuit, are connected.

According to yet another more detailed embodiment of the NPC converter, the first switching element, included in the positive and in the negative switching circuit of the NPC converter, is a metal-oxide-semiconductor field-effect transistor, MOSFET.

According to an even further more detailed embodiment of the NPC converter, the second switching element, included in the positive and in the negative switching circuit of the NPC converter, is a metal-oxide-semiconductor field-effect transistor, MOSFET.

According to another more detailed embodiment of the NPC converter, the gates of the first and the second switching element, included in the positive and in the negative switching circuit of the NPC converter, are connected.

According to a further more detailed embodiment of the NPC converter, the bypass diode of each of the positive and negative switching circuit of the NPC converter is configured for fast switching speeds.

According to yet another more detailed embodiment of the NPC converter, the bypass diode, included in the positive and in the negative switching circuit of the NPC converter, is a SiC-Schottky-Diode.

According to an even further more detailed embodiment of the NPC converter, the positive switching circuit of the NPC converter is connected between the positive input terminal and a first intermediate node for supplying the positive voltage level to the first intermediate node; and the negative switching circuit of the NPC converter is connected between the negative input terminal and a second intermediate node for supplying the negative voltage level to the second intermediate node. The neutral switching circuit of the NPC converter comprises: a first neutral diode connected between the neutral input terminal and the first intermediate node for supplying the neutral voltage level to the first intermediate node; a second neutral diode connected between the neutral input terminal and the second intermediate node for supplying the neutral voltage level to the second intermediate node; a third switching element connected between the first intermediate node and the output terminal for supplying the neutral voltage level and the positive voltage level to the output terminal; and a fourth switching element connected between the first intermediate node and the output terminal for supplying the neutral voltage level and the negative voltage level to the output terminal.

According to an alternative more detailed embodiment of the NPC converter, the positive switching circuit of the NPC converter is connected between the positive input terminal and the output terminal for supplying the positive voltage level to the output terminal; and the negative switching circuit of the NPC converter is connected between the negative input terminal and the output terminal for supplying the negative voltage level to the output terminal. The neutral switching circuit of the NPC converter comprises: a first series circuit formed of a first neutral diode and of a third switching element, the first series circuit being connected between the neutral input terminal and the output terminal for supplying, in case of a negatively pre-charged output terminal, the neutral voltage level to the output terminal; and a second series circuit formed of a second neutral diode and of a fourth switching element, the second series circuit being connected between the neutral input terminal and the output terminal for supplying, in case of a positively pre-charged output terminal, the neutral voltage level to the output terminal.

According to another more detailed embodiment of the NPC converter, the first neutral diode and the first switching element of the neutral switching circuit of the NPC converter are configured to supply the neutral voltage level to the output terminal in case the output terminal has previously been provided with a negative voltage level; and the second neutral diode and the second switching element of the neutral switching circuit of the NPC converter are configured to supply the neutral voltage level to the output terminal in case the output terminal has previously been provided with a positive voltage level.

According to an embodiment in line with the second aspect of the invention, a power module is suggested including an NPC converter as previously described.

According to a more detailed embodiment of the power module, an inductor is connected to the output terminal of the NPC converter.

The accompanying drawings are incorporated into the specification and form a part of the specification to illustrate several embodiments of the present invention. These drawings, together with the description, serve to explain the principles of the invention. The drawings are merely for the purpose of illustrating the preferred and alternative examples of how the invention can be made and used, and are not to be construed as limiting the invention to only the illustrated and described embodiments.

Furthermore, several aspects of the embodiments may form - individually or in different combinations - solutions according to the present invention. Further features and advantages will be become apparent from the following more particular description of the various embodiments of the invention as illustrated in the accompanying drawings, in which like references refer to like elements, and wherein:

Fig. 1    shows a schematic circuit diagram of an NPC converter 1000 for use in a power module according to the first embodiment; and

Fig. 2    shows a schematic circuit diagram of the NPC converter 2000 for use in a power module according to the second embodiment.

In the context of the invention, the term "reactive power" is described as an NPC converter operation mode where an NPC converter supplies reactive power for the entire duration of a half wave. However, reactive power shall not be limited in this respect. For example, in case the voltage and current are out of phase (i.e. have a phase difference of phi=60°), then reactive power corresponds

to: $\cos(60°) = \sqrt{3}\big/2$ . Accordingly, the directivity changes during a half wave i.e. from real power to reactive power. Accordingly, reactive power may not be restricted to the duration of a half wave only, but may be shorter than that. In summary, reactive power should be understood as an inversion of the power flow with respect to the polarity.

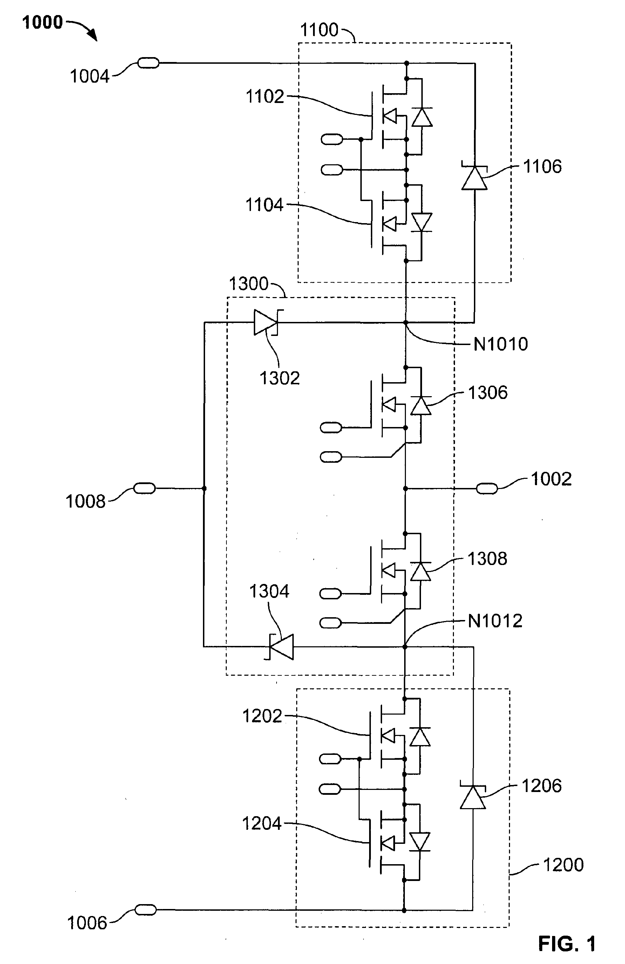

Referring now to Fig. 1, a schematic circuit diagram of a neutral point clamped, NPC converter 1000 according to the first embodiment of the invention is shown. The NPC converter 1000 is for use in a power module and comprises a positive switching circuit 1100, a negative switching circuit 1200, and a neutral switching circuit 1300.

The positive switching circuit 1100 is configured to supply, to an output terminal 1002 of the NPC converter, a positive voltage level that is provided at a positive input terminal 1004 of the NPC converter. The negative switching circuit 1200 is configured to supply, to the output terminal 1002 of the NPC converter, a negative voltage level that is provided at the negative input terminal 1006 of the NPC converter.

Further, the neutral switching circuit 1300 is configured to supply, to the output terminal 1002 of the NPC converter, a neutral voltage level that is provided at a neutral input terminal 1008 of the NPC converter. In particular, the neutral switching circuit 1300 is configured to supply the neutral voltage level regardless of whether a positive or negative voltage level was previously supplied to the output terminal 1002.

Accordingly, the positive input terminal 1004 of the NPC converter 1000 is to be connected to a DC+ terminal of an external power supply, for example, a solar panel; the negative input terminal 1006 of the NPC converter 1000 is to be connected to a DC- terminal of the external power supply.

Further, the neutral input terminal 1008 may be connected to a ground terminal of an external power supply, or may be supplied by an intermediate voltage level via two external capacitors respectively connected between the positive and negative input terminal 1004, 1006 and the neutral input terminal 1008. In the context of the invention, the term "neutral voltage level" has to be understood as an intermediate voltage level and shall not be restricted to zero voltage only.

Each of the positive and the negative switching circuit 1100, 1200 includes a series circuit formed of a first switching element 1102, 1202 having a body diode and of a second switching element for synchronous rectification 1104, 1204. Switching elements having a body diode are, for example, various typed field effect transistors, FETs, in particular, metal-oxide-semiconductor field-effect transistors, MOSFETs.

Further, the second switching element for synchronous rectification 1104, 1204 may have a body diode as, for example, the above various typed field effect transistors, FETs, in particular, metal-oxide-semiconductor field-effect transistors, MOSFETs, or may not have a body diode as, for example, metal-insulator-semiconductor field-effect transistors, MISFETs, or high-electron-mobility transistors, HEMTs of Gallium Nitride, GaN, type.

The second switching element 1104, 1204 of each of the positive and negative switching circuits 1100, 1200 is configured for synchronous rectification i.e. blocking a reverse drain current. The term "rectification" has to be understood as restricting the drain current Id to flow in one direction only (i.e. forward direction and not reverse direction). Further, the term "synchronous rectification" refers to the use of a switching element with a low ON resistance (Rds_ON) for rectification.

Accordingly, the reverse drain current (i.e. freewheeling current at reactive power) may be prevented from flowing through the first switching element 1102, 1202 of each of the positive and negative switching circuit 1100, 1200, respectively.

Currently available switching elements provide for high blocking capabilities in the forward direction. Even for drain-source voltages (Vds) as high as +600 V the switching elements can withstand a forward drain current. At the same time, the switching elements cannot withstand a drain current in reverse direction (i.e. due to the body diode). In other words, the switching elements cannot block freewheeling current at reactive power.

Consequently, the second switching element 1104, 1204 of each of the positive and negative switching circuit 1100, 1200 is provided to block a reverse drain current (i.e. freewheeling current at reactive power) from flowing within the series circuit of the respective positive and negative switching circuit 1100, 1200. In particular, the second switching element 1104, 1204 of each of the positive and negative switching circuit 1100, 1200 prevents a reverse drain current from flowing through the body diode of the first switching element 1102, 1202 of the respective positive and negative switching circuit 1100, 1200.

For the purpose of synchronous rectification, the second switching element 1104, 1204 of each of the positive and negative switching circuit 1100, 1200 is configured to control the drain current in the opposite direction with respect to the first switching element 1102, 1202 of the respective of the positive and negative switching circuit 1100, 1200.

In particular, the second switching element 1104, 1204 of each of the positive and negative switching circuit 1100, 1200 has a body diode, and both the first and the second switching elements are configured such that the body diode of the first and that of the second switching element have opposite directions for each of the positive and negative switching circuit 1100, 1200.

In other words, in each of the series circuits, included in the positive and negative switching circuit 1100, 1200, the first and the second switching element 1102, 1104 and 1202, 1204 are connected with the sources to each other such that the respective positive and negative voltage level is conducted from the drain to the source of the first switching element 1102, 1202 and thereafter conducted from the source to the drain of the second switching element 1104, 1204 of each of the positive and negative switching circuit 1100, 1200.

Further, each of the positive and negative switching circuit 1100, 1200 additionally includes a bypass diode 1106, 1206 which is connected in parallel to the series circuit of the first and second switching elements 1102 and 1104, 1202 and 1204. The bypass diode of each of the positive and negative switching circuit 1100, 1200 is reverse biased with respect to the supply of positive and negative voltage level to the output terminal.

Consequently, the bypass diode 1106, 1206 of each of the positive and negative switching circuit 1100, 1200 may carry the freewheeling current at reactive power, which the second switching element 1104, 1204 of the respective positive and negative switching circuit 1100, 1200 may prevent from flowing through the body diode of the first switching element 1102, 1202.

Advantageously, the second switching element 1104, 1204, included in each of the positive and negative switching circuit 1100, 1200 has a higher drain voltage (Vds) blocking capability than the threshold voltage (Vth) of the bypass diode 1106, 1206 of the respective positive and negative switching circuit 1100, 1200. Specifically, a slightly higher drain voltage (Vds) blocking capability of the second switching element 1104, 1204 threshold voltage (Vth) of the bypass

Assuming, for example, the threshold voltage of the bypass diode 1106, 1206 to be in a range of 0.7 V - 1.0 V, the drain voltage (Vds) blocking capability of the second switching element is in the region of 50V (minimum 3.0 V - 10V), thereby reducing the geometry, the ON resistance (Rds_ON), and the cost of the second switching element 1104, 1204

The first switching element 1102, 1202 of the series circuit of each of the positive and negative switching circuit 1100, 1200 is a metal-oxide-semiconductor field-effect transistor, MOSFET. Similarly, the second switching element 1104, 1204 of the series circuit of each of the positive and negative switching circuit 1100, 1200 is a metal-oxide-semiconductor field-effect transistor, MOSFET. In case the second switching element 1104, 1204 does not have a body diode, it is a metal-insulator-semiconductor field-effect transistor, MISFET, or high-electron-mobility transistor, HEMT, of Gallium Nitride, GaN, type.

For reducing the complexity of the control circuitry, the first and the second switching elements 1102 and 1104, 1202 and 1204 of each of the positive and negative switching circuit 1100, 1200 are symmetrically configured The gates of the first and second switching elements 1102 and 1104, 1202 and 1204 are interconnected.

In this respect, a same control signal simultaneously activates and deactivates the first and the second switching elements 1102 and 1104, 1202 and 1204 of each of the positive and negative switching circuit 1100, 1200.

The bypass diode 1106, 1206 of each of the positive and negative switching circuit 1100, 1200 is a fast recovery silicon, Si, diode or a SiC-Schottky-diode.

Referring now to the structure of the NPC converter 1000 of the first embodiment in particular to the structure of the neutral switching circuit 1300 in more detail:

The positive switching circuit 1100 of the NPC converter 1000 is connected between the positive input terminal 1004 and a first intermediate node N1010 for supplying the positive voltage level, provided at the positive input terminal 1004, to the first intermediate node N1010.

Similarly, the negative switching circuit 1200 of the NPC converter 1100 is connected between the negative input terminal 1006 and a second intermediate node N1012 for supplying the negative voltage level, provided at the negative input terminal 1006, to the second intermediate node N1012.

Included in the neutral switching circuit 1300 is a first neutral diode 1302 that is connected between the neutral input terminal 1008 and the first intermediate node N1010 for supplying the neutral voltage level to the first intermediate terminal.

The first neutral diode 1302 of the neutral switching circuit 1300 prevents the positive voltage level supplied by the positive switching circuit 1100 to the first intermediate node N1010 from flowing towards the neutral input terminal 1008. In this respect, the first neutral diode 1302 has the anode connected to the neutral input terminal 1008 and the cathode connected to the first intermediate node N1010.

Further included in the neutral switching circuit 1300 is a second neutral diode 1304 that is connected between the neutral input terminal 1800 and the second intermediate node N1012 for supplying the neutral voltage level to the second intermediate terminal.

The second neutral diode 1304 of the neutral switching circuit 1300 prevents the negative voltage level supplied by the negative switching circuit 1200 to the second intermediate node N1012 from flowing towards the neutral input terminal 1008. In this respect, the second neutral diode 13004 has the cathode connected to the neutral input terminal 1008 and the anode connected to the second intermediate node N1012.

Included in the neutral switching circuit 1300 is also a third switching element 1306 connected between the first intermediate node N1010 and the output terminal 1002 for supplying the neutral voltage level and the positive voltage level, respectively provided by the first neutral diode 1302 and the positive switching circuit 1100, to the output terminal 1002.

Further included in the neutral switching circuit 1300 is a fourth switching element 1308 connected between the first intermediate node N1012 and the output terminal 1002 for supplying the neutral voltage level and the negative voltage level, respectively provided by the second neutral diode 1304 and the negative switching circuit 1200, to the output terminal 1002.

Consequently, the neutral switching circuit 1300 provides two different paths for supplying a neutral voltage level, provided at the neutral input terminal 1008, to the output terminal 1002. Firstly, in case the output terminal 1002 is positively pre-charged, the second neutral diode 1304 and the fourth switching element 1308 provide the neutral voltage level to the output terminal 1002. Secondly, in case the output terminal 1002 is negatively pre-charged, the first neutral diode 1302 and the third switching element 1306 provide the neutral voltage level to the output terminal 1002.

Referring now to the operation of the NPC converter 1000 of the first embodiment in more detail:

The operation of the NPC converter 1000 can be structured into an operation supplying real power, and into an operation supplying reactive power. In the context of the invention, the term "real power" refers to an operation of the NPC converter where it supplies a polarity of the voltage which corresponds to (i.e. matches) the directivity of the current. Similarly, the term "reactive power" refers to an operation of the NPC converter where it supplies a polarity of the voltage which does not correspond to (i.e. is opposite to) the directivity of the current.

At real power, a positive half wave is supplied as follows: First, the third switching element 1306 of the neutral switching circuit 1300 is controlled to be in an ON state. Then, the first and the second switching elements 1102, 1104 of the series circuit of the positive switching circuit 1100 are controlled to be in an ON state.

Accordingly, a current which corresponds to the voltage polarity in-between the positive input terminal 1004 and the output terminal 1002 flows as drain current through the first, the second and the third switching elements 1102, 1104, 1306.

Advantageously, each of the first, the second and the third switching elements 1102, 1104 and 1306 has a low ON resistance (Rds_ON), for example, in the region of 10 - 100 mΩ. Thereby the conduction losses of the NPC converter are reduced, and the efficiency is improved. The ON resistance of a switching element is considerably lower than the threshold voltage (Vth) of a diode.

Thereafter, the first and the second switching elements 1102, 1104 of the series circuit of the positive switching circuit 1100 are controlled to be in an OFF state. At the same time, the third switching element 1306 of the neutral switching circuit 1300 is controlled to maintain an ON state.

Consequently, a freewheeling current, which tries to resist a sudden change in current magnitude, is induced and flows from the neutral input terminal 1008, via the first neutral diode 1302 and the third switching element 1306 of the neutral switching circuit 1300, to the output terminal 1002. The freewheeling current is, for example, induced by an inductance at the output terminal 1002.

At real power, a negative half wave is subsequently supplied as follows: First, the fourth switching element 1308 of the neutral switching circuit 1300 is controlled to be in an ON state. Then, the first and the second switching elements 1202, 1204 of the series circuit of the negative switching circuit 1200 are controlled to be in an ON state.

Accordingly, a current which corresponds to the voltage polarity in-between the negative input terminal 1006 and the output terminal 1002 flows as drain current through the first, the second and the fourth switching elements 1202, 1204, 1308.

Advantageously, each of the first, the second and the fourth switching elements 1202, 1204 and 1308 has a low ON resistance (Rds_ON), for example, in the region of 10 - 100 mΩ. Thereby the conduction losses of the NPC converter are reduced, and the efficiency is improved. The ON resistance of a switching element is considerably lower than the threshold voltage (Vth) of a diode.

Thereafter, the first and the second switching elements 1202, 1204 of the series circuit of the negative switching circuit 1200 are controlled to be in an OFF state. At the same time, the fourth switching element 1308 of the neutral switching circuit 1300 is controlled to maintain an ON state.

Consequently, a freewheeling current, which tries to resist a sudden change in current magnitude, is induced and flows from the neutral input terminal 1008 via the second neutral diode 1304 and the fourth switching element 1308 of the neutral switching circuit 1300 to the output terminal 1002. The freewheeling current is, for example, induced by an inductance at the output terminal 1002.

At reactive power, a positive half wave is supplied as follows: the first and the second switching element 1202, 1204 of the negative switching circuit are controlled to be OFF for the entire duration of the negative half wave.

In short, during positive half wave at reactive power the fourth switching element 1308 is chopped and a freewheeling path is provided via first and second switching elements 1102 and 1104 of the positive switching circuit. Accordingly, turn ON of the first and second switching elements 1102 and 1104 needs to be synchronized with the turn OFF of the third switching element 1306.

In order to reduce conduction losses, bypass diode 1106 of the positive switching circuit is provided for conducting the freewheeling current in the death time between the turn OFF of fourth switching element 1308 and the turn ON of first and second switching elements 1102 and 1104 of the positive switching circuit.

In more detail, first the fourth switching element 1308 of the neutral switching circuit 1300 is controlled to be in an ON state. The third switching element 1306 of the neutral switching circuit 1300 is controlled to be in an ON state for the duration of the positive half wave in order to provide the freewheeling path for the output current.

Assuming that the output terminal 1002 has a positive voltage level; a current flows from the output terminal 1002, via the fourth switching element 1308 and the second neutral diode 1304 of the neutral switching circuit 1300, to the neutral input terminal 1008. Consequently, an inductance at the output terminal 1002 may store energy.

Since the first neutral diode 1302 is reverse biased with respect to the positive voltage at the output terminal 1002, the negative switching circuit 1200 is controlled to prevent the current from flowing towards the negative input terminal 1006, and the positive switching circuit 1100 is also controlled to prevent the current from flowing towards positive input terminal 1004, the current can only flow into the neutral input terminal 1008.

In can be assumed that the positive voltage level, provided at the positive input terminal 1004, is higher than the positive voltage at the output terminal 1002 thereby resulting in a blocking of the bypass diode 1106.

Then, the fourth switching element 1308 of the neutral switching circuit 1300 is controlled to be in an OFF state, and subsequently, the first and second switching element 1102 and 1104 of the series circuit of the positive switching circuit 1100 are controlled to be in an ON state.

Consequently, a freewheeling current, which tries to resist a sudden change in current magnitude, is induced and flows from the output terminal 1002 via the third switching element 1306 of the neutral switching circuit 1300, the second and the first switching elements 1104, 1102 of the positive switching circuit 1100 to the positive input terminal 1004. The freewheeling current is, for example, induced by the inductance at the output terminal 1002.

Advantageously, each of the first, the second and the third switching elements 1102, 1104 and 1306 has a low ON resistance (Rds_ON). The second switching elements 1104, 1204 typically have 1/50th-1/10th of the ON-resistance(Rds_ON) of the first, third and fourth switching elements 1102, 1202, 1306, 1308, 2306, 2308., for example, in the region of 1 - 5mΩ compared to 10 - 100 mΩ for the first, third and fourth switching elements 1102, 1202, 1306, 1308, 2306, 2308. In particular, the ON resistances of the first and second switching elements 1102, 1104 are together considerably lower than the threshold voltage (Vth) of the bypass diode 1106 of the positive switching circuit 1100.

Consequently, the freewheeling current flows via the second and the first switching elements 1104, 1102 and not via the bypass diode 1106, thereby reducing the conduction losses of the freewheeling current at reactive power within the NPC converter 1000.

In summary, the NPC converter 1000 supplies a positive voltage, provided at the positive input terminal 1004, to the output terminal 1002 and effects a current to flow from the output terminal 1002 towards the positive input terminal 1004, such that the polarity of the voltage is opposite to the directivity of the current.

Depending on the size of the inductance at the output terminal 1002 and the amount of reactive power to be supplied by the NPC converter 1000, the above steps of turning ON the fourth switching element 1308 and then turning OFF the fourth switching element 1308 and turning ON the first and second switching elements 1102, 1104 are repeated. This mechanism may be referred to as chopping.

Notably, the first and the second switching elements 1102, 1104 of the positive switching circuit 1100 are controlled to be in an OFF state before the fourth switching element 1308 of the neutral switching circuit 1300 is controlled to be in an ON state. In-between these two control operations, the freewheeling current no longer flows through the first and second switching elements 1102, 1104, but instead through the bypass diode 1106 of the positive switching circuit 1100.

Therefore, the first and the second switching elements 1102, 1104 are not subject to reverse recovery effects; it is solely the bypass diode 1106 of the positive switching circuit 1100 that experiences a reverse recovery current at reactive power. Yet, the bypass diode 1106 of the positive switching circuit 1100 is particularly configured for fast switching speeds, thereby reducing the reverse recovery losses at reactive power within the NPC converter.

Consequently, the parallel circuit of the reverse bypass diode 1106 and the series circuit of the first and the second switching elements 1102, 1104 included in the positive switching circuit 1100 allow for reducing the switching losses at reactive power within the NPC converter.

At reactive power, a negative half wave is supplied as follows: the first and the second switching elements 1102, 1104 of the positive switching circuit 1100 are controlled to be OFF during the negative half wave.

In short, during negative half wave at reactive power the third switching element 1306 is chopped, and the freewheeling path provided via first and second switching elements 1202 and 1204 of the negative switching circuit Accordingly, turn ON of the first and second switching elements 1202 and 1204 needs to be synchronized with the turn OFF of the third switching element 1306.

In order to reduce conduction losses, bypass diode 1206 of the negative switching circuit is provided for conducting the freewheeling current in the death time between the turn OFF of third switching element 1306 and the turn ON of the first and second switching elements 1202 and 1204 of the negative switching circuit.

In more detail, first the third switching element 1306 of the neutral switching circuit 1300 is controlled to be in an ON state. The fourth switching element 1304 of the neutral switching circuit 1300 is controlled to be in an ON state for the duration of the negative half wave in order to provide the freewheeling path for the output current.

Assuming the output terminal 1002 to have a negative voltage; a current flows from the neutral input terminal 1008, via the first neutral diode 1302 and the third switching element 1306 of the neutral switching circuit 1300, to the output terminal 1002. Consequently, an inductance at the output terminal 1002 may store energy.

Since the second neutral diode 1304 is reverse biased with respect to the negative voltage at the output terminal 1002, the positive switching circuit 1100 is controlled to prevent the current from flowing towards the positive input terminal 1004, and negative switching circuit 1200 is also controlled to prevent the current from flowing towards negative input terminal 1006, the current can only flow into the neutral input terminal 1008.

In can be assumed that the negative voltage level, provided at the negative input terminal 1006, is lower than the negative voltage at the output terminal 1002 thereby resulting in a blocking of the bypass diode 1206.

Then, the third switching element 1306 of the neutral switching circuit 1300 is controlled to be in an OFF state, and subsequently, the first and second switching elements 1202 and 1204 of the series circuit of the negative switching circuit 1200 are controlled to be in an ON state.

Consequently, a freewheeling current, which tries to resist a sudden change in current magnitude, is induced and flows from the negative input terminal 1004 via the second and the first switching elements 1204, 1202 of the negative switching circuit 1200, the fourth switching element 1308 of the neutral switching circuit 1300, to the output terminal 1002. The freewheeling current is, for example, induced by the inductance at the output terminal 1002.

Advantageously, each of the first, the second and the fourth switching elements 1202, 1204 and 1308 has a low ON resistance (Rds_ON), for example, in the region of 10 - 50 mΩ. In particular, the ON resistances of the first and second switching elements 1202, 1204 are together considerably lower than the threshold voltage (Vth) of the bypass diode 1206 of the negative switching circuit 1200.

Consequently, the freewheeling current flows via the second and the first switching elements 1204, 1202 and not via the bypass diode 1206, thereby reducing the conduction losses of the freewheeling current at reactive power within the NPC converter 1000.

In summary, the NPC converter 1000 supplies a negative voltage, provided at the negative input terminal 1006, to the output terminal 1002 and effects a current to flow from the negative input terminal 1006 to flow towards the output terminal 1002, such that polarity of the voltage is opposite to the directivity of the current.

Depending on the size of the inductance at the output terminal 1002 and the amount of reactive power to be supplied by the NPC converter 1000, the above steps of turning ON the third switching element 1306 and then turning OFF the third switching element 1306 and turning ON the first, second switching elements 1202, 1204 are repeated. This mechanism may be referred to as chopping.

Notably, the first and the second switching elements 1202, 1204 of the negative switching circuit 1200 are controlled to be in an OFF state before the third switching element 1306 of the neutral switching circuit 1300 is controlled to be in an ON state. In-between these two control operations the freewheeling current no longer flows through the first and second switching elements 1202, 1204 but instead through the bypass diode 1206 of the negative switching circuit 1200.

Therefore, the first and the second switching elements 1202, 1204 are not subject to reverse recovery effects and solely the bypass diode 1206 of the negative switching circuit 1200 experiences a reverse recovery current at reactive power. Yet, the bypass diode 1206 of the negative switching circuit 1200 is particularly configured for fast switching speeds, thereby reducing the reverse recovery losses at reactive power within the NPC converter.

Consequently, the parallel circuit of the reverse bypass diode 1206 and the series circuit of the first and the second switching elements 1202, 1104 included in the negative switching circuit 1200 allow for reducing the switching losses at reactive power within the NPC converter.

The above description repeatedly refers to an inductance at the output terminal 1002 of the NPC converter 1000. However, it shall be pointed out that this inductance is not essential to the invention. Moreover, the description merely emphasizes the benefits in case the NPC converter 1000 is operated as part of a power module with an inductance at the output terminal 1002.

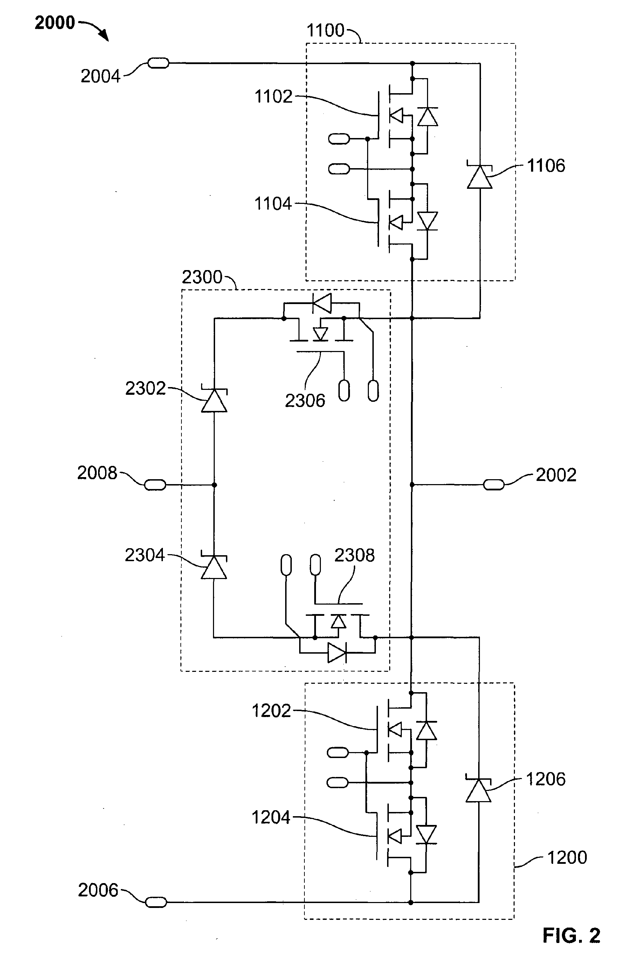

Referring now to Fig. 2; a schematic circuit diagram of a neutral point clamped, NPC, converter 2000 according to a second embodiment of the invention is shown. The NPC converter 2000 of the second embodiment is based on the NPC converter 1000 of Fig. 1 where corresponding parts are given corresponding reference numerals and terms. The detailed description of corresponding parts has been omitted for reasons of conciseness.

The NPC converter 2000 is for use in a power module and comprises a positive switching circuit 1100, a negative switching circuit 1200 and a neutral switching circuit 2300.

The positive switching circuit 1100 of the NPC converter 2000 corresponds to that of the first embodiment and is also configured to supply, to an output terminal 2002 of the NPC converter, a positive voltage level that is provided at a positive input terminal 2004. Similarly, the negative switching circuit 1100 of the NPC converter 2000 corresponds to that of the first embodiment and is also configured to supply, to the output terminal 2002, a negative voltage level provided at a negative input terminal 2006.

Further, a neutral switching circuit 2300 is configured to supply, to the output terminal 2002 of the NPC converter, a neutral voltage level that is provided at a neutral input terminal 2008. In particular, the neutral switching circuit 2300 is configured to supply the neutral voltage level regardless of whether a positive or negative voltage level was previously supplied to the output terminal 2002.

Also in NPC converter 2000, the second switching element 1104, 1204 of each of the positive and negative switching circuits 1100, 1200 is provided to block a reverse drain current (i.e. freewheeling current at reactive power) from flowing within the series circuit of the respective positive and negative switching circuit 1100, 1200.

Similarly, also in the NPC converter 2000, the bypass diode 1106, 1206 of each of the positive and negative switching circuit 1100, 1200 may carry the freewheeling current at reactive power, which the second switching element 1104, 1204 of the respective positive and negative switching circuit 1100, 1200 may prevent from flowing through the body diode of the first switching element 1102, 1202.

Notably, the neutral switching circuit 2300 of the NPC converter 2000 differs from that of the first embodiment which shall become apparent from the following description of the structure of the NPC converter 2000 of the second embodiment:

The positive switching circuit 1100 of the NPC converter 2000 is connected between the positive input terminal 2004 and the output terminal 2002 for supplying the positive voltage level, provided at the positive input terminal 2004, to the output terminal 2002.

Similarly, the negative switching circuit 1200 of the NPC convert 2000 is connected between the negative input terminal 2006 and the output terminal 2002 for supplying the negative voltage level, provided at the negative input terminal 2006, to the output terminal 2002.

Included in the neutral switching circuit 2300 is a first series circuit formed of a first neutral diode 2302 and of a third switching element 2306, the first series circuit being connected between the neutral input terminal 2008 and the output terminal 2002 for supplying, in case of a negatively pre-charged output terminal 2002, the neutral voltage level to the output terminal 2002.

Further included in the neutral switching circuit 2300 is a second series circuit formed of a second neutral diode 2304 and of a fourth switching element 2308, the second series circuit being connected between the neutral input terminal 2008 and the output terminal 2002 for supplying, in case of a positively pre-charged output terminal 2002, the neutral voltage level to the output terminal 2002.

Consequently, the neutral switching circuit 2300 provides two different paths for supplying a neutral voltage level, provided at the neutral input terminal 2008, to the output terminal 2002. Firstly, in case the output terminal 2002 is positively pre-charged, the second neutral diode 2304 and the fourth switching element 2308 provide the neutral voltage level to the output terminal 2002. Secondly, in case the output terminal 2002 is negatively pre-charged, the first neutral diode 2302 and the third switching element 2306 provide the neutral voltage level to the output terminal 2002.

Advantageously, since the positive and the negative switching circuits 1100, 1200 are directly connected between the respective positive and negative input terminal 2004, 2006 and the output terminal 2002, the conduction losses of the NPC converter 2000 are further reduced with respect to the first embodiment.

Specifically, in the NPC converter 2000 only two switching elements (and not three switching elements) of the positive and negative switching circuit 1100, 1200 are supplying the respective positive and negative voltage level to the output terminal 2002, such that the overall efficiency of the NPC converter 2000 improves.

At the same time, however, the components of the positive and negative switching circuit 1100, 1200 of the NPC converter 2000 have to withstand higher DC voltages than in the first embodiment. For example, in case the NPC converter 2000 is provided with a positive voltage level of +600 Volts and a negative voltage level of -600 Volts at the respective positive and negative input terminals 2004, 2006, the positive and negative switching circuit 1100, 1200 is subject to +/- 1200 Volts during supply of a respective negative and positive half wave.

In particular, in the NPC converter 2000 the first switching element 1102, 1202 of the positive and negative switching circuit 1100, 1200 has to withstand the full DC voltage, for example, of +/- 1200 Volts. Similarly, the bypass diode 1106, 1206 of the positive and negative switching circuit 1100, 1200 also has to withstand the full DC voltage, for example of, +/- 1200 Volts.

In this respect, in the NPC converter 2000 the first switching element 1102, 1202 and the bypass diode 1106, 1206 require a different voltage rating with respect to the other components of the NPC converter 2000, which is not the case for the components of the NPC converter of the first embodiment.

The operation of the NPC converter 2000 of the second embodiment corresponds to that of the first embodiment with the specialty that the third and fourth switching element 2302, 2304 of the neutral switching circuit 2300 are controlled in the same manner to the respective third and fourth switching elements 1302, 1304 of the first embodiment, with the only difference that, during reactive power, the third/fourth switching elements 2306 2308 of the neutral switching circuit 2300 are not controlled to be in an ON state for the duration of the positive/negative half wave, respectively.

In summary, due to the similarities in the structure and operation of the NPC converter 2000 of the second embodiment with that of the first embodiment, same NPC converter 2000 realizes the advantages noted in connection with the first embodiment, in particular reduction of conduction losses and, at reactive power, of the switching losses resulting from reverse recovery effects.

**Claims**

1. A neutral point clamped, NPC, converter for use in a power module, comprising:

   a positive and a negative switching circuit configured to supply, to an output terminal, a positive and a negative voltage level provided at a positive and negative input terminal, respectively; and
   a neutral switching circuit configured to supply, to the output terminal, a neutral voltage level provided at a neutral input terminal;
   wherein each of the positive and the negative switching circuit includes a parallel circuit of a reverse biased bypass diode and a series circuit of two switching elements for controlling the supply of the positive and negative voltage level to the output terminal;
   wherein each of the series circuits, included in the positive and in the negative switching circuit, is formed of a first switching element having a body diode and of a second switching element for synchronous rectification;
   wherein for synchronous rectification the second switching element, included in the positive and in the negative switching circuit, is configured to block a reverse drain current (Ids) from flowing through the body diode of the first switching element, included in the respective positive and negative switching circuit.

2. The NPC converter according to claim 1, wherein the second switching element, included in the positive and in the negative switching circuit, has a body diode, and the body diode of the second switching element has an opposite direction with respect to the body diode of the first switching element, included in the respective positive and negative switching circuit.

3. The NPC converter according to claim 1 or 2, wherein the second switching element, included in the positive and in the negative switching circuit, has an higher drain voltage (Vds) blocking capability than a threshold voltage (Vth) of the bypass diode, included in the respective positive and negative switching circuit.

4. The NPC converter according to one of claims 1 to 3, wherein the first switching element, included in the positive and in the negative switching circuit, is a metal-oxide-semiconductor field-effect transistor, MOSFET.

5. The NPC converter according to one of claims 1 to 4, wherein the second switching element, included in the positive and in the negative switching circuit, is a metal-oxide-semiconductor field-effect transistor, MOSFET, GaN type MISFET or GaN type HEMT.

6. The NPC converter according to one of claims 1 to 5, wherein the gates of the first and the second switching element, included in the positive and in the negative switching circuit, are connected.

7. The NPC converter according to one of claims 1 to 6, wherein the bypass diode of each of the positive and negative switching circuit is configured for fast switching speeds.

8. The NPC converter according to one of claims 1 to 7, wherein the bypass diode, included in the positive and in the negative switching circuit, is a SiC-Schottky-Diode.

9. The NPC converter according to one of claims 1 to 8, wherein
the positive switching circuit is connected between the positive input terminal and a first intermediate node for supplying the positive voltage level to the first intermediate node; and
the negative switching circuit is connected between the negative input terminal and a second intermediate node for supplying the negative voltage level to the second intermediate node; and
wherein the neutral switching circuit comprises:

- a first neutral diode connected between the neutral input terminal and the first intermediate node for supplying the neutral voltage level to the first intermediate node;
- a second neutral diode connected between the neutral input terminal and the second intermediate node for supplying the neutral voltage level to the second intermediate node;
- a third switching element connected between the first intermediate node and the output terminal for supplying the neutral voltage level and the positive voltage level to the output terminal;

and
- a fourth switching element connected between the first intermediate node and the output terminal for supplying the neutral voltage level and the negative voltage level to the output terminal.

10. The NPC converter according to one of claims 1 to 8, wherein
the positive switching circuit is connected between the positive input terminal and the output terminal for supplying the positive voltage level to the output terminal; and
the negative switching circuit is connected between the negative input terminal and the output terminal for supplying the negative voltage level to the output terminal; and
wherein the neutral switching circuit comprises:

- a first series circuit formed of a first neutral diode and of a third switching element, the first series circuit being connected between the neutral input terminal and the output terminal for supplying, in case of a negatively pre-charged output terminal, the neutral voltage level to the output terminal; and
- a second series circuit formed of a second neutral diode and of a fourth switching element, the second series circuit being connected between the neutral input terminal and the output terminal for supplying, in case of a positively pre-charged output terminal, the neutral voltage level to the output terminal.

11. The NPC converter according to one of claims 9 or 10, wherein
the first neutral diode and the first switching element of the neutral switching circuit are configured to supply the neutral voltage level to the output terminal in case the output terminal has previously been provided with a negative voltage level; and
the second neutral diode and the second switching element of the neutral switching circuit are configured to supply the neutral voltage level to the output terminal in case the output terminal has previously been provided with a positive voltage level.

12. A power module including a NPC converter according to one of claims 1 to 11.

13. The power module according to claim 12, wherein an inductor is connected to the output terminal 1002 of the NPC converter.

**Amended claims in accordance with Rule 137(2) EPC.**

1. A neutral point clamped, NPC, converter for use in a power module, comprising:

  a positive and a negative switching circuit (1100, 1200) configured to supply, to an output terminal (1002), a positive and a negative voltage level provided at a positive and negative input terminal (1004, 1006), respectively; and
  a neutral switching circuit (1300) configured to supply, to the output terminal, a neutral voltage level provided at a neutral input terminal;
  wherein each of the positive and the negative switching circuit includes a parallel circuit of a reverse biased bypass diode (1106, 1206) and a series circuit of two switching elements (1102, 1104, 1202, 1204) for controlling the supply of the positive and negative voltage level to the output terminal;
  wherein each of the series circuits, included in the positive and in the negative switching circuit, is formed of a first switching element (1102, 1202) having a body diode and of a second switching element (1104, 1204) for synchronous rectification;
  wherein, for synchronous rectification, the second switching element, included in the positive and in the negative switching circuit, is configured to block during freewheeling a reverse drain current (Ids) from flowing through the body diode of the first switching element, included in the respective positive and negative switching circuit; and wherein the second switching element, included in the positive and in the negative switching circuit, has a body diode, and the body diode of the second switching element has an opposite direction with respect to the body diode of the first switching element, included in the respective positive and negative switching circuit.

2. The NPC converter according to claim 1, wherein the second switching element, included in the positive and in the negative switching circuit, has an higher drain voltage (Vds) blocking capability than a threshold voltage (Vth) of the bypass diode, included in the respective positive and negative switching circuit.

3. The NPC converter according to one of claims 1 to 2, wherein the first switching element, included in the positive and in the negative switching circuit, is a metal-oxide-semiconductor field-effect transistor, MOSFET.

4. The NPC converter according to one of claims 1 to 3, wherein the second switching element, included in the positive and in the negative switching circuit, is a metal-oxide-semiconductor field-effect transistor, MOSFET, GaN type MISFET or GaN type HEMT.

5. The NPC converter according to one of claims 1 to 4, wherein the gates of the first and the second switching element, included in the positive and in the negative switching circuit, are connected.

6. The NPC converter according to one of claims 1 to 5, wherein the bypass diode of each of the positive and negative switching circuit is configured for fast switching speeds.

7. The NPC converter according to one of claims 1 to 6, wherein the bypass diode, included in the positive and in the negative switching circuit, is a SiC-Schottky-Diode.

8. The NPC converter according to one of claims 1 to 7, wherein
the positive switching circuit is connected between the positive input terminal and a first intermediate node (N 1010) for supplying the positive voltage level to the first intermediate node; and
the negative switching circuit is connected between the negative input terminal and a second intermediate node (N 1012) for supplying the negative voltage level to the second intermediate node; and
wherein the neutral switching circuit comprises:

  - a first neutral diode (1302) connected between the neutral input terminal and the first intermediate node for supplying the neutral voltage level to the first intermediate node;
  - a second neutral diode (1304) connected between the neutral input terminal and the second intermediate node for supplying the neutral voltage level to the second intermediate node;
  - a third switching element (1306) connected between the first intermediate node and the output terminal for supplying the neutral voltage level and the positive voltage level to the output terminal; and
  - a fourth switching element (1308) connected between the first intermediate node and the output terminal for supplying the neutral voltage level and the negative voltage level to the output terminal.

9. The NPC converter according to one of claims 1 to 7, wherein
the positive switching circuit is connected between the positive input terminal and the output terminal for supplying the positive voltage level to the output terminal; and the negative switching circuit is connected between the negative input terminal and the output terminal for supplying the negative voltage level to the output terminal; and
wherein the neutral switching circuit comprises:

  - a first series circuit formed of a first neutral diode (2302) and of a third switching element (2306), the first series circuit being connected between the neutral input terminal and the output terminal for supplying, in case of a negatively pre-charged output terminal, the neutral voltage level to the output terminal; and

- a second series circuit formed of a second neutral diode (2304) and of a fourth switching element (2308), the second series circuit being connected between the neutral input terminal and the output terminal for supplying, in case of a positively pre-charged output terminal, the neutral voltage level to the output terminal.

10. The NPC converter according to one of claims 8 or 9, wherein

the first neutral diode and the first switching element of the neutral switching circuit are configured to supply the neutral voltage level to the output terminal in case the output terminal has previously been provided with a negative voltage level; and the second neutral diode and the second switching element of the neutral switching circuit are configured to supply the neutral voltage level to the output terminal in case the output terminal has previously been provided with a positive voltage level.

11. A power module including a NPC converter according to one of claims 1 to 10.

12. The power module according to claim 11, wherein an inductor is connected to the output terminal 1002 of the NPC converter

**FIG. 1**

FIG. 2

Europäisches
Patentamt

European
Patent Office

Office européen
des brevets

# EUROPEAN SEARCH REPORT

Application Number

EP 13 19 2187

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 413 489 A1 (VINOTECH HOLDINGS S A R L [LU] VINCOTECH HOLDINGS S A R L [LU]) 1 February 2012 (2012-02-01) * paragraphs [0007], [0814], [85110]; figures 2,3 * | 1-13 | INV. H02M7/487 |
| A | US 2011/013438 A1 (FRISCH MICHAEL [DE] ET AL) 20 January 2011 (2011-01-20) * paragraph [0034] - paragraph [0045]; figure 8 * | 1-13 | |
| A | EP 2 590 312 A1 (ALSTOM TECHNOLOGY LTD [CH]) 8 May 2013 (2013-05-08) * paragraph [0031] - paragraph [0036]; figures 1-4 * | 1-13 | |

TECHNICAL FIELDS
SEARCHED      (IPC)

H02M

The present search report has been drawn up for all claims

| Place of search | Date of completion of the search | Examiner |
|---|---|---|
| The Hague | 18 March 2014 | Speiser, Pierre |

## ANNEX TO THE EUROPEAN SEARCH REPORT
## ON EUROPEAN PATENT APPLICATION NO.

EP 13 19 2187

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2014

| Patent document cited in search report | | Publication date | Patent family member(s) | | Publication date |
|---|---|---|---|---|---|
| EP 2413489 | A1 | 01-02-2012 | CN | 102347702 A | 08-02-2012 |
| | | | EP | 2413489 A1 | 01-02-2012 |
| | | | US | 2012033474 A1 | 09-02-2012 |
| US 2011013438 | A1 | 20-01-2011 | NONE | | |
| EP 2590312 | A1 | 08-05-2013 | CN | 103095168 A | 08-05-2013 |
| | | | EP | 2590312 A1 | 08-05-2013 |
| | | | US | 2013272045 A1 | 17-10-2013 |

EPO FORM P0459

For more details about this annex : see Official Journal of the European Patent Office, No. 12/82